# EUROPEAN PATENT APPLICATION

(11) **EP 4 679 552 A1**
(43) Date of publication of application: **14.01.2026**
(21) Application number: 24770380.4
(22) Date of filing: 16.02.2024
(51) Int. Cl.: H01M 10/0562, C01F 7/54, H01B 1/06, H01M 10/052, H01M 10/0585

(54) **ARRANGEMENT STRUCTURE OF SOLID ELECTROLYTE IN ALL-SOLID-STATE CELL, AND BATTERY**

(30) Priority: 10.03.2023 JP 2023038001
(71) Applicant: Tohoku University, Sendai-shi, Miyagi 980-8577 (JP); Dowa Holdings Co., Ltd., Tokyo 101-0021 (JP)
(72) Inventor: KOBAYASHI, Hiroaki, Sendai-shi, Miyagi 980-8577 (JP); ABE, Daisuke, Tokyo 101-0021 (JP); TANOUE, Koji, Tokyo 101-0021 (JP)
(74) Representative: Schmidbauer, Andreas Konrad
(86) International application number: PCT/JP2024/005483
(87) International publication number: WO 2024/190265

(57) **Abstract**

[Problem] To provide an advantageous technique for further improving the charging voltage in an all-solid-state cell such as an all-solid-state lithium-ion secondary battery.

[Solution] An arrangement structure of a solid electrolyte in an all-solid-state cell, including a first solid electrolyte that contains, as a main component, a crystalline phase containing Li, Al, and F and having a β-Li₃AlF₆ type structure or an amorphous phase containing Li, Al, and F within a range where x satisfies 2.0 or more and 5.0 or less in a composition formula LiₓAlF₃₊ₓ, and including a second solid electrolyte that contains, as a main component, a sulfide or an oxide between a high-potential side electroconductive material and a low-potential side electroconductive material in an all-solid-state cell, and in which the first solid electrolyte is interposed between the high-potential side electroconductive material and the second solid electrolyte, and a contact portion between the high-potential side electroconductive material and the first solid electrolyte, and a contact portion between the first solid electrolyte and the second solid electrolyte are provided.

## Description

### Technical Field

The present invention relates to an arrangement structure of a solid electrolyte in an all-solid-state cell represented by an all-solid-state lithium-ion secondary battery. The invention also relates to an all-solid-state lithium-ion secondary battery having the arrangement structure.

### Background Art

In an all-solid-state lithium-ion secondary battery (hereafter sometimes referred to as "all-solid-state battery"), a solid electrolyte is disposed between a positive electrode active material and a negative electrode active material as a separator, and lithium ions are conducted between the two active materials via the solid electrolyte. Various types of solid electrolytes such as sulfide-based, oxide-based, and polymer-based solid electrolytes have been developed, but at present, a sulfide-based solid electrolyte is considered to be advantageous in terms of ion conduction property and production cost.

The all-solid-state battery has a problem that the interfacial resistance between the positive electrode active material and the solid electrolyte being the separator increases, and the performance such as the capacity of the battery tends to deteriorate. This increase in the interfacial resistance is said to be mainly caused by the reaction between the positive electrode active material and the solid electrolyte to form a high resistance area on the surface of the positive electrode active material, and tends to cause a problem when a sulfide-based solid electrolyte is used as the separator. Therefore, an attempt has been made to cover the surface of the positive electrode active material with a solid electrolyte as a protective material made of a lithium ion conductive oxide (typically LiNbO₃ is well known) or a halide, thereby avoiding the reaction of the positive electrode active material with the solid electrolyte being the separator. However, the solid electrolyte as the protective material deteriorates when a high charging voltage is applied. In the case of LiNbO₃, which is a typical protective material, deterioration is accelerated when the charging voltage exceeds 4.45 V.

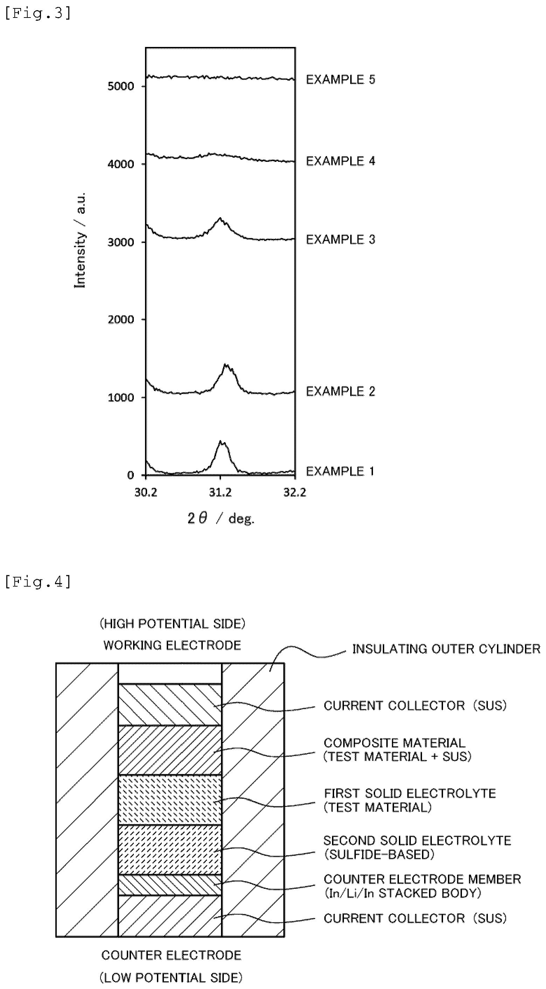

PTL 1 describes the use of a halide containing Cl as a solid electrolyte as a protective material that covers at least a portion of the surface of a positive electrode active material. In Examples in PTL 1, an evaluation experiment was performed using an electrochemical cell in which a halide solid electrolyte was placed in contact with a sulfide-based solid electrolyte. According to the experiment, it is evaluated that the halide solid electrolyte shown in the Examples reacted to cause oxidative decomposition at normal temperature at a voltage of 3.88 to 4.47 V vs. In-Li (Table 1). This measurement value is converted in terms of a metallic Li and becomes a value resulting from adding 0.6 V (paragraph 0173). Therefore, it can be considered that in the case of the solid electrolyte (a halide containing Cl) for covering according to the technique of PTL 1, the oxidation resistance during charging has been raised to about 4.48 to 5.07 V, which is higher than 4.45 V. However, in the above experiment, the voltage at which a current value of 3 µA or more begins to flow is defined as the oxidative decomposition voltage and evaluated (paragraph 0175, FIG. 3).

On the other hand, PTL 2 describes the use of Li₃AlF₆ as a material of a negative electrode active material. This Li₃AlF₆ is considered to be γ-Li₃AlF₆ because it is fired at 850 to 900°C (paragraph 0018) and a (222) diffraction peak at around 2θ = 31.2°, which is characteristic of β-Li₃AlF₆, is not observed in the X-ray diffraction pattern using Cu-Kα radiation (FIG. 2). In addition, it is described that in the technique of PTL 2, amorphous Li₃AlF₆ may be used, but it is not described that the amorphous material is used on the positive electrode side.

### Citation List

### Patent Literature

PTL 1: WO2020/174868
PTL 2: JP2022-114320A

### Summary of Invention

### Technical Problem

From the viewpoint of energy density, the higher the charging voltage of the battery is, the more preferable it is. However, when the charging voltage is increased, the solid electrolyte as a protective material deteriorates, and therefore it was generally not easy to increase the charging voltage higher than 4.45 V up to now. Although it is considered to be possible to achieve a charging voltage exceeding 4.45 V in an all-solid-state battery according to the technique of PTL 1, it will be necessary to establish a technique capable of achieving an even higher charging voltage in the future.

An object of the invention is to provide an advantageous technique for further improving the charging voltage in an all-solid-state cell such as an all-solid-state lithium-ion secondary battery.

### Solution to Problem

In order to achieve the above object, the present description discloses the following invention.
[1] An arrangement structure of a solid electrolyte in an all-solid-state cell, including a first solid electrolyte and a second solid electrolyte between a high-potential side electroconductive material and a low-potential side electroconductive material in an all-solid-state cell, in which
   the first solid electrolyte contains, as a main component, a crystalline phase containing Li, Al, and F and having a β-Li₃AlF₆ type structure or an amorphous phase containing Li, Al, and F within a range where x satisfies 2.0 or more and 5.0 or less in a composition formula LiₓAlF₃₊ₓ, and the second solid electrolyte contains, as a main component, a sulfide or an oxide,
   the first solid electrolyte is interposed between the high-potential side electroconductive material and the second solid electrolyte, and a contact portion between the high-potential side electroconductive material and the first solid electrolyte, and a contact portion between the first solid electrolyte and the second solid electrolyte are provided.
[2] The arrangement structure of a solid electrolyte according to the above [1], in which in the first solid electrolyte, a half width of a diffraction peak of a (222) crystal plane of a β-Li₃AlF₆ type structure is 0.25° or more in an X-ray diffraction pattern using Cu-Kα radiation with a horizontal axis being 2θ (°), or a half width of the diffraction peak cannot be measured because an amorphous material is the main component.
[3] The arrangement structure of a solid electrolyte in an all-solid-state cell according to the above [1] or [2], in which the high-potential side electroconductive material is formed of a positive electrode active material and another electroconductive member, and the first solid electrolyte is interposed between the positive electrode active material and the second solid electrolyte so as to avoid direct contact between the positive electrode active material and the second solid electrolyte, and the contact portion between the positive electrode active material and the first solid electrolyte and the contact portion between the first solid electrolyte and the second solid electrolyte are provided so as to have a structure in which ion conduction between the positive electrode active material and the second solid electrolyte is ensured.
[4] The arrangement structure of a solid electrolyte according to any one of the above [1] to [3], in which the all-solid-state cell is an all-solid-state lithium-ion secondary battery.
[5] An all-solid-state lithium-ion secondary battery having the arrangement structure of a solid electrolyte according to any one of the above [1] to [3].

In the present description, the "high-potential side" means being located on the high potential electrode (a positive electrode in a battery) side in the charge path with respect to the solid electrolyte as a separator disposed between both electrodes. The "low-potential side" means being located on the low potential electrode (a negative electrode in a battery) side in the charge path with respect to the solid electrolyte as a separator disposed between both electrodes.

### Advantageous Effects of Invention

According to the invention, it is possible to construct an all-solid-state cell using a new solid electrolyte with a high decomposition voltage, and therefore by combining the solid electrolyte with, for example, a separator made of a known sulfide-based solid electrolyte, it is expected to achieve an all-solid-state lithium-ion secondary battery with a charging voltage exceeding 5 V or 6 V.

### Brief Description of Drawings

[FIG. 1] FIG. 1 is a diagram schematically illustrating a cross-sectional structure of one aspect of an all-solid-state battery having an arrangement structure of a solid electrolyte of the invention.
[FIG. 2] FIG. 2 is a diagram illustrating X-ray diffraction patterns for test materials (first solid electrolytes) obtained in Examples.
[FIG. 3] FIG. 3 is an enlarged diagram of the (222) diffraction peaks in the X-ray diffraction patterns of the test materials (first solid electrolytes) obtained in Examples.
[FIG. 4] FIG. 4 is a cross-sectional view schematically showing a stacked structure of an electrochemical cell produced for evaluating high voltage application resistance in Examples.
[FIG. 5] FIG. 5 is a graph illustrating a potential-current curve measured using an electrochemical cell.

### Description of Embodiments

### [All-Solid-State Cell]

A configuration example of an all-solid-state cell to which the invention is directed will be described using an all-solid-state battery as an example.

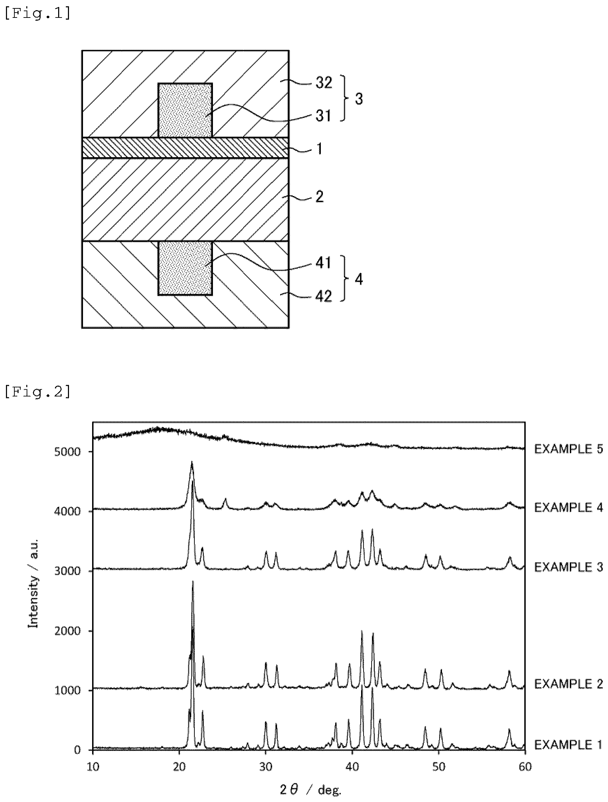

FIG. 1 schematically illustrates a cross-sectional structure of one aspect of an all-solid-state battery having an arrangement structure of a solid electrolyte of the invention. In this drawing, the structure of the cell is extremely simplified in order to explain the positional relationship of each member. A high-potential side electroconductive material 3 and a low-potential side electroconductive material 4 face each other with a first solid electrolyte 1 and a second solid electrolyte 2 being a separator interposed therebetween. The first solid electrolyte 1 is interposed between the high-potential side electroconductive material 3 and the second solid electrolyte 2. There is a mutual contact portion between the high-potential side electroconductive material 3 and the first solid electrolyte 1, and there is also a mutual contact portion between the first solid electrolyte 1 and the second solid electrolyte 2.

In an all-solid-state battery, the high-potential side electroconductive material 3 is usually formed of a positive electrode active material 31 and an electroconductive material 32 other than the positive electrode active material. The positive electrode active material 31 is an ion conductive material and also an electroconductive material. The electroconductive material 32 other than the positive electrode active material is a current collector, an electroconductive aid, or the like. The positive electrode material in an actual all-solid-state battery is generally formed of an electroconductive member such as a current collector, a positive electrode active material, or an electroconductive aid, or particles or the like of an ion conductive material (solid electrolyte) mixed to fill the gaps between the particles of the positive electrode active material. The high-potential side electroconductive material 3 in FIG. 1 is one schematically illustrating the arrangement relationship of a portion formed of an electroconductive member in such a positive electrode material with respect to the first solid electrolyte 1. In the illustrated aspect, the positive electrode active material 31 and the first solid electrolyte 1 are in contact with each other, and thereby ion conduction between the second solid electrolyte 2 being a separator and the positive electrode active material 31 is performed via the first solid electrolyte 1. In addition, the positive electrode active material 31 and the electroconductive material 32 other than the positive electrode active material are in contact with each other, and thereby electrical conduction is ensured between the positive electrode active material 31 and an external wiring member (not shown) that is connected to the electroconductive material 32 other than the positive electrode active material.

As the positive electrode active material 31, a known material can be applied, and when a new positive electrode active material is developed, the new material can also be applied. Examples of representative known positive electrode active materials include LiCoO₂ (LCO type), LiNiO₂ (LNO type), LiMn₂O₄ (LMO type), LiNiCoAlO₂ (NCA type), LiNiCoMnO₂ (NCM type), Li₂MnO₃-LiNiCoMnO₂ (solid solution type), LiNiMnO₄ (spinel type), LiMnFePO₄ (phosphate type), and Li₂FeSiO₄ (silicate type).

As described later, the first solid electrolyte 1 contains, as a main component, a crystalline phase having a β-Li₃AlF₆ type structure or an amorphous phase containing Li, Al, and F in a predetermined range. In the aspect in FIG. 1, the high-potential side electroconductive material 3 is completely blocked from contact with the second solid electrolyte 2 being a separator by the first solid electrolyte 1. Therefore, the member forming the high-potential side electroconductive material 3 is prevented from reacting due to contact with the second solid electrolyte 2 containing a sulfide or the like as a main component. That is, the first solid electrolyte 1 has a function as a protective material. In addition, the first solid electrolyte 1 applied in the invention has excellent resistance to deterioration when a high voltage is applied in the case of being placed in contact with the second solid electrolyte 2 containing a sulfide or the like as a main component as described later, and therefore the arrangement structure of the aspect shown in FIG. 1 is effective in improving the charging voltage of an all-solid-state battery.

The second solid electrolyte 2 contains a sulfide or an oxide as a main component and functions as a separator. The phrase "contains a sulfide or an oxide as a main component" means that the total content of a sulfide and an oxide among the constituent materials of the second solid electrolyte 2 is 50 mass% or more. Either one type of sulfide or one type of oxide may be used alone, or two or more types of materials selected from sulfides and oxides may be used in combination.

As the sulfide or the oxide, a known material having an ion conduction property can be applied, and when a new ion conductive material is developed, the new material can also be applied. Examples of representative known ion conductive material include Li₆PS₅Cl (crystal (argyrodite)), Li_{9.54}Si_{1.74}P_{1.44}S_{11.7}Cl_{0.3} (crystal), Li₁₀GeP₃S₁₂ (crystal), 30Li₂S·26B₂S₃·44LiI (glass), 63Li₂S·36SiS₂· 1Li₃PO₄ (glass), 57Li₂S·38SiS₂·5Li₄SiO₄ (glass), 70Li₂S·30P₂S₅ (glass), Li₇P₃S₁₁ (glass ceramic), and Li_{3.25}P_{0.95}S₄ (glass ceramic).

In an all-solid-state battery, the low-potential side electroconductive material 4 is usually formed of a negative electrode active material 41 and an electroconductive material 42 other than the negative electrode active material. The negative electrode material in an actual all-solid-state battery is generally formed of an electroconductive member such as a current collector or a negative electrode active material, or particles or the like of an ion conductive material (solid electrolyte) mixed to fill the gaps between the particles of the negative electrode active material. However, the low-potential side electroconductive material 4 in FIG. 1 is one schematically illustrating the arrangement relationship of a portion formed of an electroconductive member in such a negative electrode material with respect to the second solid electrolyte 2. The configuration of the low-potential side electroconductive material 4 and the arrangement relationship between the electroconductive material 4 and the second solid electrolyte 2 can be the same as those of a known all-solid-state battery. A third solid electrolyte may be placed between the second solid electrolyte 2 and the low-potential side electroconductive material 4 as needed.

In the aspect of the all-solid-state battery having the arrangement structure shown in FIG. 1, the entire high-potential side electroconductive material 3 is separated from the second solid electrolyte (such as a sulfide) being a separator due to the interposition of the first solid electrolyte 1, so that it is adaptable to the improvement of the charging voltage without covering the surface of the particles of the positive electrode active material 31 with a solid electrolyte being a protective material.

### [First Solid Electrolyte]

In the invention, a compound Li₃AlF₆ is used as the first solid electrolyte. Li₃AlF₆ is generally known as a crystalline ion conductive material. It is said that a Li₃AlF₆ crystal changes into several phase forms such as β and γ as a heat treatment temperature during synthesis increases. As a result of studies, the inventors have discovered that, a material having a β-Li₃AlF₆ type structure among the above phase forms has an ion conduction property that can be used as the above-mentioned protective material, and is excellent in the property of being less susceptible to deterioration (decomposition) due to an oxidation reaction when a high voltage is applied in a state of being in contact with an iron conductive material using a sulfide or the like (hereinafter, this is sometimes referred to as "high voltage application resistance"). In addition, it was verified that the compound Li₃AlF₆ exhibits good high voltage application resistance even when it has an amorphous structure, and its ion conduction property is superior to that of crystalline Li₃AlF₆.

### (Crystalline Phase Having β-Li₃AlF₆ Type Structure)

One aspect of the first solid electrolyte is an aspect in which a crystalline phase containing Li (lithium), Al (aluminum), and F (fluorine) and having a β-Li₃AlF₆ type structure is contained as a main component.

Here, the "β-Li₃AlF₆ type structure" refers to a crystal structure in which diffraction peaks corresponding to the diffraction peaks from each crystal plane of a β-Li₃AlF₆ crystal having a stoichiometric composition are observed in an X-ray diffraction pattern.

The phrase "a crystalline phase having a β-Li₃AlF₆ type structure is contained as a main component" means that, in an X-ray diffraction pattern, when the integrated intensity of a diffraction peak with the highest peak height among the diffraction peaks of the β-Li₃AlF₆ type structure is denoted by I₀ and the integrated intensity of a diffraction peak with the highest peak height among the diffraction peaks of a different phase (a crystalline phase other than the crystalline phase having a β-Li₃AlF₆ type structure) is denoted by I₁, a relationship I₁ < I₀ is established. Here, when no different phase is detected, I₁ = 0, and the above relationship I₁ < I₀ is satisfied. In the first solid electrolyte containing a crystalline phase having a β-Li₃AlF₆ type structure as a main component, even if a different phase is mixed, the ion conduction property and high voltage application resistance due to the crystalline phase having a β-Li₃AlF₆ type structure are exhibited. However, in order to obtain these effects more efficiently, it is desirable that the abundance of a different phase is small. For example, it is more preferable to satisfy I₁ < 0.5I₀, and it is further more preferable to satisfy I₁ < 0.3I₀. It is particularly preferable that the first solid electrolyte is one in which no different phase is detected.

As shown in ICDD card 01-088-0860, a β-Li₃AlF₆ crystal belongs to a monoclinic space group C2/c, and has a crystal structure in which a diffraction peak from a (222) crystal plane is observed at around 2θ = 31.2° in an X-ray diffraction pattern using Cu-Kα radiation. A γ-Li₃AlF₆ crystal being another phase form is a tetragonal crystal as shown in ICDD card 00-022-1137, and has a crystal structure in which no diffraction peak is observed at around 2θ = 31.2° in an X-ray diffraction pattern using Cu-Kα radiation. Therefore, the crystalline phase having a β-Li₃AlF₆ type structure to which the invention is directed can be distinguished from the crystalline phase having a γ-Li₃AlF₆ type structure by the fact that the above-mentioned (222) diffraction peak is observed.

The crystalline phase having a β-Li₃AlF₆ type structure can exist in a composition range in which the composition ratio of Li, Al, and F is close to the stoichiometric composition of Li₃AlF₆. Even if the composition has an atomic ratio of Li, Al, and F that is somewhat different from the stoichiometric composition of Li₃AlF₆, it is possible to form a solid electrolyte containing a crystalline phase having a β-Li₃AlF₆ type structure as a main component, but from the viewpoint of reducing the abundance of a different phase as much as possible, the composition preferably contains Li, Al, and F within a range where x satisfies 2.0 or more and 5.0 or less in the composition formula LiₓAlF₃₊ₓ.

As described above, according to the study by the inventors, it was found that the crystalline phase having a β-Li₃AlF₆ type structure is an ion conductive material that exhibits excellent high voltage application resistance. The Li₃AlF₆ crystal has a structure in which Li ions are present around the skeleton of an AlF₆ octahedron, and it is considered that the chemical stability is enhanced due to the strong Al-F bond of the skeleton, and it is speculated that in the β-Li₃AlF₆ type structure, the chemical stability is particularly effective in improving the high voltage application resistance.

Further, the inventors also verified that the ion conduction property is improved in the crystalline phase having a β-Li₃AlF₆ type structure with somewhat low crystallinity (regularity of atomic arrangement). It is considered that the low crystallinity makes it easier to ensure the diffusion path of Li ions in the three-dimensional direction, which is advantageous for ion conduction. As an index of crystallinity, a half width of a diffraction peak in an X-ray diffraction pattern can be adopted. The half width is large when the crystallinity is low. As a result of various studies, the effect of improving the ion conduction property is large in the β-Li₃AlF₆ type structure in which the half width of a diffraction peak of a (222) crystal plane (a peak observed at 2θ of around 31.2° with Cu-Kα radiation), which is a characteristic of the β-Li₃AlF₆ type structure, is 0.25° or more. It is more effective that the half width is 0.35° or more. The diffraction peak of the (222) crystal plane has little overlap with other diffraction peaks, and is suitable for evaluating crystallinity.

The crystallinity of a β-Li₃AlF₆ type structure crystal can be controlled mainly by the firring temperature. When the firring temperature is set low, it becomes easier to obtain a crystal with low crystallinity.

### (Amorphous Phase)

Another aspect of the first solid electrolyte is an aspect in which an amorphous phase containing Li, Al, and F within a range where x satisfies 2.0 or more and 5.0 or less in the composition formula LiₓAlF₃₊ₓ is contained as a main component.

In an amorphous material, no clear diffraction peak is observed in an X-ray diffraction pattern, but a broad intensity peak (rise) is observed in a region where 2θ is a relatively low angle. When a crystalline phase is mixed, a diffraction peak derived from the crystal may be observed. The phrase "an amorphous phase is contained as a main component" refers to a case where, in an X-ray diffraction pattern with 2θ (°) on the horizontal axis and the observed intensity (arbitrary unit) on the vertical axis, the vertical axis height of the top of the broad intensity peak is higher than the vertical axis height of any diffraction peak derived from the mixed crystalline phase.

As described above, the crystalline phase having a β-Li₃AlF₆ type structure exhibits excellent high voltage application resistance, and it was verified that also in amorphous Li₃AlF₆, high voltage application resistance higher than a conventional ion conductive material used as a protective material can be achieved, and that the ion conduction property is superior to that of the above β-Li₃AlF₆ type structure. Although no clear peak is observed in X-ray diffraction, amorphous Li₃AlF₆ may have a structure in which the skeletal structure of AlF₆ is randomly dispersed and Li is present between the skeletons. It is speculated that such a unique structure may improve the high voltage application resistance. Even in an amorphous layer with a composition that is somewhat different from the stoichiometric composition of Li₃AlF₆, the effect of improving the high voltage application resistance and the ion conduction property can be obtained, but it is desirable to reduce mixing with a phase that does not contribute to the properties as much as possible. From this viewpoint, in the invention, it is specified that the first solid electrolyte containing an amorphous phase as a main component contains Li, Al, and F within a range where x satisfies 2.0 or more and 5.0 or less in the composition formula LiₓAlF₃₊ₓ.

When the amorphous phase and the above-mentioned crystalline phase having a β-Li₃AlF₆ type structure are mixed, the compositional requirement of the invention is satisfied as long as either of the crystalline phase having a β-Li₃AlF₆ type structure and the amorphous phase is contained as the main component.

### (Synthesis Method)

The crystalline phase having a β-Li₃AlF₆ type structure and the amorphous phase of a compound Li₃AlF₆ can be synthesized, for example, by utilizing the process of a "liquid phase method" or a "solid phase method" described below.

### (i) Liquid Phase Method

A Li-containing material, an Al-containing material, and an F-containing material, all of which are water-soluble, are dissolved in water to prepare an aqueous solution containing Li, Al, and F. An example of the Li-containing material is lithium nitrate (LiNO₃), an example of the Al-containing material is aluminum nitrate nonahydrate (Al(NO₃)₃·9H₂O), and an example of the F-containing material is ammonium fluoride (NH₄F). The amount of each material to be mixed may be set so that the amount ratio of Li, Al, and F is the stoichiometric composition of Li₃AlF₆, but a variation within a range where x satisfies 2.0 or more and 5.0 or less in the composition formula LiₓAlF₃₊ₓ is permitted.

Subsequently, the water component of the solvent is evaporated off to obtain a powder. Heating during evaporation is desirably performed at 120°C or lower. In a case where the purpose is to obtain a material with an amorphous phase, a powder obtained at this stage is recovered and adopted.

Subsequently, the powder is fired to synthesize a crystalline phase having a β-Li₃AlF₆ type structure. The firing atmosphere can be air, but is preferably an inert gas atmosphere such as Ar. The firing temperature is preferably set in the range of 170 to 430°C. By setting the highest reached temperature in the above temperature range, it is possible to prevent the formation of a crystalline phase having a γ-Li₃AlF₆ type structure. The firing time (holding time in the above temperature range) may be set, for example, in the range of 0.5 to 5 hours. The highest reached temperature of firing is more preferably set to 350°C or lower, and still more preferably 300°C or lower.

### (ii) Solid Phase Method

Lithium fluoride (LiF) and aluminum fluoride (AlF₃), each of which is a solid material, are mechanically mixed. The mixing ratio of these materials may be set to LiF:AlF₃ = 3:1 so that the amount ratio of Li, Al, and F is the stoichiometric composition of Li₃AlF₆, but a variation within a range where x satisfies 2.0 or more and 5.0 or less in the composition formula LiₓAlF₃₊ₓ is permitted. The mechanical mixing can be performed by a method of grinding and mixing using a grinder such as a dry ball mill. The time for grinding and mixing is preferably set in the range of 1 to 50 hours so that both materials are sufficiently mixed. The atmosphere in the mixing vessel is preferably an inert gas atmosphere such as Ar. In a case where the purpose is to obtain a material with an amorphous phase, the powder obtained by this mechanical mixing is recovered and adopted.

Subsequently, the powder obtained by the mechanical mixing is fired in the same manner as in the case of the liquid phase method described above to synthesize a crystalline phase having a β-Li₃AlF₆ type structure.

### Examples

### [Example 1]

A powder in which the amount ratio of Li, Al, and F is the stoichiometric composition of Li₃AlF₆ was synthesized by a liquid phase method as follows.

In 125 g of pure water at 25°C, 3.20 g of lithium nitrate LiNO₃ (manufactured by FUJIFILM Wako Pure Chemical Industries, Ltd.), 5.79 g of aluminum nitrate nonahydrate Al(NO₃)₃·9H₂O (manufactured by FUJIFILM Wako Pure Chemical Industries, Ltd.), and 3.43 g of ammonium fluoride NH₄F (manufactured by FUJIFILM Wako Pure Chemical Industries, Ltd.) were mixed, and completely dissolved by stirring with a stirrer for 30 minutes to obtain a raw material aqueous solution. The raw material aqueous solution was heated and held at 100°C while stirring with the stirrer to evaporate water. Thereafter, the resultant was vacuum dried by a method of holding the resultant at 110°C for 2 hours in a vacuumed chamber to obtain a white dried powder. This dried powder was fired by a method of holding the powder at 400°C for 6 hours in an Ar atmosphere to obtain a fired powder. This fired powder was subjected to the following experiment as a test material.

### (Measurement of X-Ray Diffraction Pattern)

The X-ray diffraction pattern of the test material was measured using an X-ray diffractometer (Ultima IV, manufactured by Rigaku Corporation) under the following conditions: Cu-Kα radiation, tube voltage: 40 kV, tube current: 40 mA, divergence slit: 1/2°, scattering slit: 8 mm, receiving slit: open, step width: 0.02°/step, and scan speed: 0.666667. As a result, it was verified that the test material of this example had a β-Li₃AlF₆ type structure.

FIG. 2 illustrates the X-ray diffraction pattern (the same applies to each of the following Examples).

In addition, with respect to the diffraction peak of the (222) crystal plane of the β-Li₃AlF₆ type structure observed at around 2θ = 31.2°, the half width of the (222) diffraction peak was determined using X-ray diffraction pattern analysis software (PDXL2, manufactured by Rigaku Corporation) based on the measurement data using Kα₁ radiation from which Kα₂ radiation was removed, under the condition that the σ cut value, which is the threshold value between the background and the peak, was set to 3.0. As a result, the half width of the (222) diffraction peak of the test material of this example was 0.20°.

FIG. 3 shows an enlarged diagram of the (222) diffraction peak (the same applies to each of the following Examples).

### (Evaluation of Ion Conduction Property)

In a cylindrical container with a diameter of 10 mm, 0.09 g of a powder sample of the test material was placed, and pressed at 180 MPa with a press machine to obtain a green compact. With respect to the obtained green compact, the ion conduction was measured by an AC impedance method at 25°C in an Ar atmosphere using a potentio/galvanostat (VersaSTAT 4, manufactured by Prinston) in the range of 0.1 Hz to 1 MHz at an amplitude voltage of 100 mV. The resistance value of the sample was determined from a Cole-Cole plot (complex impedance plane plot) of the measurement value, and the ionic conductivity of the test material was calculated from the obtained resistance value. As a result, it was verified that the test material of this example had an ion conductivity of 5 × 10⁻¹¹ S/cm and is a solid electrolyte exhibiting a lithium ion conduction property.

### (Evaluation of High Voltage Application Resistance)

Here, in accordance with the evaluation method disclosed in PTL 1, an all-solid-state electrochemical cell having a structure in which a solid electrolyte of a test material (first solid electrolyte) and a sulfide-based solid electrolyte (second solid electrolyte) were arranged next to each other was produced, and the decomposition voltage due to the oxidation reaction of the test material was determined. Specifically, the experiment was performed as follows.

An electrochemical cell having a stacked structure shown in FIG. 4 was produced as follows.

An argyrodite-type sulfide (Li₆PS₅Cl) was prepared as the second solid electrolyte. In an insulating outer cylinder (inner diameter: 9.5 mm) made of an alumina tube, 57 mg of this sulfide was placed and press-molded at a pressure of 80 MPa to form a layer of the second solid electrolyte.

Subsequently, 20 mg of the powder being the test material was placed on the second solid electrolyte layer and press-molded at a pressure of 80 MPa to form a layer of the first solid electrolyte.

Subsequently, 20 mg of a composite material obtained by mixing a powder of the test material and a powder of stainless steel (SUS316) at a volume ratio of 50:50 in a mortar was placed on the layer of the first solid electrolyte and press-molded at a pressure of 360 MPa to form a layer of the composite material.

Subsequently, a metal In (indium) sheet with a thickness of 200 µm, a metal Li sheet with a thickness of 300 µm, and a metal In sheet with a thickness of 200 µm were stacked in the above order under the second solid electrolyte layer (on the side opposite to the first solid electrolyte), and press-molded at a pressure of 80 MPa to form a layer of a counter electrode member having an In/Li/In three-phase structure.

Subsequently, a current collector formed of a sheet material of stainless steel (SUS316) was placed on the composite material layer and under the counter electrode member layer, and a current collecting lead was provided on each current collector.

The electrochemical cell produced as described above was placed in a thermostat bath at 25°C, and a voltage was swept from the open circuit voltage of the electrochemical cell to 6.0 V vs. Li (synonymous with 5.4 V vs. In-Li) at a sweep rate of 1 mV/s with the composite material layer side as a working electrode being a high potential electrode, and the counter electrode member layer side as a counter electrode being a low potential electrode, and the current fluctuations were measured. Hereinafter, the potential value (V) represents a Li-based potential (V vs. Li) unless otherwise specified. The Li-based potential (V vs. Li) is a value obtained by adding 0.6 V to an In-Li-based potential (V vs. In-Li).

Although the solid electrolyte is originally an insulating material with respect to electrical conduction based on the movement of electrons, as also shown in PTL 1, when the applied voltage to the working electrode in the above electrochemical cell is swept toward the high potential side, a small current, which is considered to be derived from a non-faradaic reaction that does not involve the transfer of electrons, or a side reaction of adsorbed water or impurities, flows first. Then, when the first solid electrolyte undergoes an oxidation reaction and is altered (decomposed), a current due to the oxidation reaction is observed. When the current starts to increase relative to the above-mentioned small current being the base current, it can be considered that the oxidation of the first solid electrolyte is occurring. According to the measurements in this example and the below-mentioned Examples, in a region where the applied voltage exceeds 3.0 V in all examples, the current value remains flat up to 4.0 V, and the change is also small, and therefore here, the applied voltage at which a current value that is 1.5 times higher than the current value at an applied voltage of 4.0 V is first observed was defined as the "decomposition voltage", and the high voltage application resistance was evaluated based on the decomposition voltage. As a result, the decomposition voltage of the test material of this example was 5.83 V.

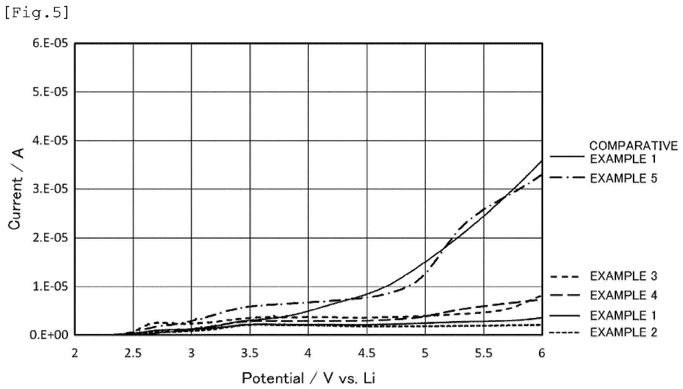

FIG. 5 illustrates a potential-current curve measured using this electrochemical cell (the same applies to each of the following Examples).

Note that in PTL 1, a voltage at which a current of 3 µA uniformly flows is defined as the oxidative decomposition voltage (paragraph 0175). When the above decomposition voltage defined in the present description is determined with respect to the data shown in FIG. 3 in PTL 1, the value becomes lower than the oxidative decomposition voltage of the Examples shown in Table 1 in PTL 1 (4.48 to 5.07 V in terms of Li). It can be said that the decomposition voltage according to the definition in the present description adopts a stricter standard than PTL 1 in that the potential before a sudden increase in current value begins to occur is regarded as the decomposition voltage.

### [Example 2]

A test material was synthesized under the same conditions as in Example 1 except that the firing temperature was changed from 400°C to 300°C.

The obtained test material was examined in the same manner as in Example 1. As a result, it was verified that the obtained test material has a β-Li₃AlF₆ type structure, and the half width of the (222) diffraction peak was 0.25°. The ionic conductivity was 1 × 10⁻⁹ S/cm, which was better than that of Example 1. Further, in a potential sweep up to 6.0 V, no current that reached the decomposition voltage flowed. In other words, the decomposition voltage is evaluated as more than 6.0 V.

### [Example 3]

A powder in which the amount ratio of Li, Al, and F is the stoichiometric composition of Li₃AlF₆ was synthesized by a solid phase method as follows.

Lithium fluoride LiF (manufactured by FUJIFILM Wako Pure Chemical Industries, Ltd.) and aluminum fluoride AlF₃ (manufactured by FUJIFILM Wako Pure Chemical Industries, Ltd.) were weighed at a molar ratio of 3:1. These were ground and mixed for 36 hours in an Ar atmosphere by a dry ball mill using zirconia balls with a diameter of 10 mm to obtain a white powder. This powder was fired by a method of holding the powder at 300°C for 6 hours in an Ar atmosphere to obtain a fired powder.

This fired powder was examined in the same manner as in Example 1 as a test material. As a result, it was verified that the obtained test material has a β-Li₃AlF₆ type structure, and the half width of the (222) diffraction peak was 0.28°. The ionic conductivity was 3 × 10⁻⁹ S/cm, and the decomposition voltage was 5.73 V.

### [Example 4]

A test material was synthesized under the same conditions as in Example 3 except that the firing temperature was changed from 300°C to 200°C.

The obtained test material was examined in the same manner as in Example 1. As a result, it was verified that the obtained test material has a β-Li₃AlF₆ type structure, and the half width of the (222) diffraction peak was 0.44°, and one having lower crystallinity than that of Example 3 was obtained. The ionic conductivity was 1 x 10⁻⁸ S/cm, which was improved as compared with Example 3. The decomposition voltage was 5.12 V.

### [Example 5]

A powder in which the amount ratio of Li, Al, and F is the stoichiometric composition of Li₃AlF₆ was synthesized by a solid phase method as follows.

Lithium fluoride LiF (manufactured by FUJIFILM Wako Pure Chemical Industries, Ltd.) and aluminum fluoride AlF₃ (manufactured by FUJIFILM Wako Pure Chemical Industries, Ltd.) were weighed at a molar ratio of 3:1. These were ground and mixed for 36 hours in an Ar atmosphere by a dry ball mill using zirconia balls with a diameter of 10 mm to obtain a white powder.

Here, this powder (unsintered one) was examined in the same manner as in Examples as a test material. As a result, it was verified that the obtained test material is amorphous. The ionic conductivity was 5 × 10⁻⁷ S/cm, which was even better than that of Example 3. The decomposition voltage was 4.85 V.

### [Comparative Example 1]

A powder of lithium niobate LiNbO₃, which has been conventionally used for a protective material of a positive electrode active material, was synthesized by a liquid phase method described below.

A hydrogen peroxide aqueous solution in which 7.7 g of a hydrogen peroxide solution with a concentration of 35 mass% was added to 19.6 g of pure water was prepared. To this hydrogen peroxide aqueous solution, 4.4 g of niobic acid (Nb₂O₅·nH₂O) with a Nb₂O₅ content of 58.0% was added, and the liquid temperature was maintained at 20 to 30°C, and 3.5 g of ammonia water with a concentration of 28 mass% was added thereto, and the mixture was sufficiently stirred in an air atmosphere to obtain a transparent solution. Subsequently, 0.9 g of lithium hydroxide monohydrate (LiOH·H₂O) was added to this liquid in a nitrogen atmosphere to obtain a transparent aqueous solution containing lithium and a peroxo complex, which was then evaporated to dryness by heating the solution with a hot plate at 100°C in a nitrogen atmosphere. Thereafter, the obtained dried solidified material was subjected to a heat treatment of holding the material at 200°C for 12 hours. The powder after this heat treatment was subjected to the following examination as a test material.

When the X-ray diffraction pattern was measured, it was verified that the test material was amorphous.

The ion conduction property and the high voltage application resistance were evaluated in the same manner as in Example 1. As a result, the ionic conductivity was 5 × 10⁻⁸ S/cm, which was good. However, the decomposition voltage was 4.36 V, which was low.

The above results are collectively shown in Table 1.

### [Table 1]

**Table 1**

| Example No. | Test material (first solid electrolyte) | | | | | | All-solid-state electrochemical cell |
|---|---|---|---|---|---|---|---|
| | Composition | Synthesis method | Firing temperature (°C) | Crystal structure | Half width of (222) diffraction peak (deg.) | Ionic conductivity (S/cm) | Decomposition voltage (V vs. Li) |
| Example 1 | Li₃AlF₆ | Liquid phase method | 400 | β-Li₃AlF₆ | 0.20 | 5×10⁻¹¹ | 5.83 |
| Example 2 | Li₃AlF₆ | Liquid phase method | 300 | β-Li₃AlF₆ | 0.25 | 1×10⁻⁹ | >6.0 |
| Example 3 | Li₃AlF₆ | Solid phase method | 300 | β-Li₃AlF₆ | 0.28 | 3×10⁻⁹ | 5.73 |
| Example 4 | Li₃AlF₆ | Solid phase method | 200 | β-Li₃AlF₆ | 0.44 | 1×10⁻⁸ | 5.12 |
| Example 5 | Li₃AlF₆ | Solid phase method | - | Amorphous | - | 5×10⁻⁷ | 4.85 |
| Comparative Example 1 | LiNbO₃ | Liquid phase method | 200 | Amorphous | - | 5×10⁻⁸ | 4.36 |

It was verified that the ion conductive material (first solid electrolyte) having the composition specified in the invention obtained in each Example has excellent high voltage application resistance when being arranged next to a sulfide-based solid electrolyte, and also has a good ion conduction property. Therefore, the arrangement structure of the solid electrolyte of the invention formed using such an ion conductive material for the first solid electrolyte can contribute to improving the charging voltage in an all-solid-state battery.

### Reference Signs List

- 1:: First solid electrolyte
- 2:: Second solid electrolyte
- 3:: High-potential side electroconductive material
- 4:: Low-potential side electroconductive material
- 31:: Positive electrode active material
- 32:: Electroconductive material other than positive electrode active material
- 41:: Negative electrode active material
- 42:: Electroconductive material other than negative electrode active material

## Claims

1. An arrangement structure of a solid electrolyte in an all-solid-state cell, comprising a first solid electrolyte and a second solid electrolyte between a high-potential side electroconductive material and a low-potential side electroconductive material in an all-solid-state cell, wherein
the first solid electrolyte contains, as a main component, a crystalline phase containing Li, Al, and F and having a β-Li₃AlF₆ type structure or an amorphous phase containing Li, Al, and F within a range where x satisfies 2.0 or more and 5.0 or less in a composition formula LiₓAlF₃₊ₓ, and the second solid electrolyte contains, as a main component, a sulfide or an oxide,
the first solid electrolyte is interposed between the high-potential side electroconductive material and the second solid electrolyte, and a contact portion between the high-potential side electroconductive material and the first solid electrolyte, and a contact portion between the first solid electrolyte and the second solid electrolyte are provided.

2. The arrangement structure of a solid electrolyte according to claim 1, wherein in the first solid electrolyte, a half width of a diffraction peak of a (222) crystal plane of a β-Li₃AlF₆ type structure is 0.25° or more in an X-ray diffraction pattern using Cu-Kα radiation with a horizontal axis being 2θ (°), or a half width of the diffraction peak cannot be measured because an amorphous material is the main component.

3. The arrangement structure of a solid electrolyte in an all-solid-state cell according to claim 1, wherein the high-potential side electroconductive material is formed of a positive electrode active material and another electroconductive member, and the first solid electrolyte is interposed between the positive electrode active material and the second solid electrolyte so as to avoid direct contact between the positive electrode active material and the second solid electrolyte, and the contact portion between the positive electrode active material and the first solid electrolyte and the contact portion between the first solid electrolyte and the second solid electrolyte are provided so as to have a structure in which ion conduction between the positive electrode active material and the second solid electrolyte is ensured.

4. The arrangement structure of a solid electrolyte according to any one of claims 1 to 3, wherein the all-solid-state cell is an all-solid-state lithium-ion secondary battery.

5. An all-solid-state lithium-ion secondary battery having the arrangement structure of a solid electrolyte according to any one of claims 1 to 3.
